# EUROPEAN PATENT APPLICATION

(11) **EP 4 357 518 A2**
(43) Date of publication of application: **24.04.2024**
(21) Application number: 23204908.0
(22) Date of filing: 20.10.2023
(51) Int. Cl.: D06M 10/02, D06N 3/00, D06N 3/14, D06M 101/20

(54) **POLYPROPYLENE FABRIC AND FABRIC TREATING METHOD**

(30) Priority: 21.10.2022 TW 111211559 U; 19.10.2023 TW 112139899
(71) Applicant: Hsu, Ching Shui, R.O.C. Taichung City, 404311 (TW); Ho, Wan Jo, R.O.C. Taipei City, 10422 (TW)
(72) Inventor: Hsu, Ching Shui, R.O.C. Taichung City, 404311 (TW); Ho, Wan Jo, R.O.C. Taipei City, 10422 (TW)
(74) Representative: dompatent von Kreisler Selting Werner - Partnerschaft von Patent- und Rechtsanwälten mbB

(57) **Abstract**

A polypropylene fabric woven from a plurality of polypropylene fibers comprises a first surface and a second surface, at least one of the first surface and the second surface is treated with electro-optical treatment.

## Description

### BACKGROUND

### 1. Technical Field

This disclosure relates to a polypropylene fabric and fabric treating method, especially to a polypropylene fabric and fabric treating method that increases roughness of the fabric surface.

### 2. Related Art

Polypropylene fabric is widely used in manufacturing various goods due to its eco-friendly, quick-drying and other properties. In the processing of polypropylene fabric, it is often necessary to apply glue on the surface of polypropylene fabric. However, the glue on the surface of polypropylene fabric often has the problem of false adhesion, and white marks often occur when the fabric is folded.

### SUMMARY

Accordingly, this disclosure provides a polypropylene fabric and fabric treating method.

According to one or more embodiment of this disclosure, a polypropylene fabric woven from a plurality of polypropylene fibers comprises a first surface and a second surface, at least one of the first surface and the second surface treated with electro-optical treatment.

According to one or more embodiment of this disclosure, a fabric treating method, adapted to a polypropylene fabric woven from a plurality of polypropylene fibers, and the method comprises: performing electro-optical treatment on at least one of a first surface and a second surface of the polypropylene fabric.

In view of the above description, the polypropylene fabric and the fabric treating method according to one or more embodiments of the present disclosure performs electro-optical treatment on the surface(s) of the polypropylene fabric to increase the surface roughness, may thereby improving adhesion of materials subsequently applied to the surface and avoiding white marks caused by folding

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a schematic diagram illustrating a polypropylene fabric according to an embodiment of the present disclosure;
FIG. 2 is an exemplary diagram illustrating a woven fiber structure of the polypropylene fabric according to an embodiment of the present disclosure;
FIG. 3 is a schematic diagram illustrating a polypropylene fabric according to another embodiment of the present disclosure;
FIG. 4 is a schematic diagram illustrating a polypropylene fabric according to yet another embodiment of the present disclosure; and
FIG. 5 is a flowchart illustrating a fabric treating method according to an embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

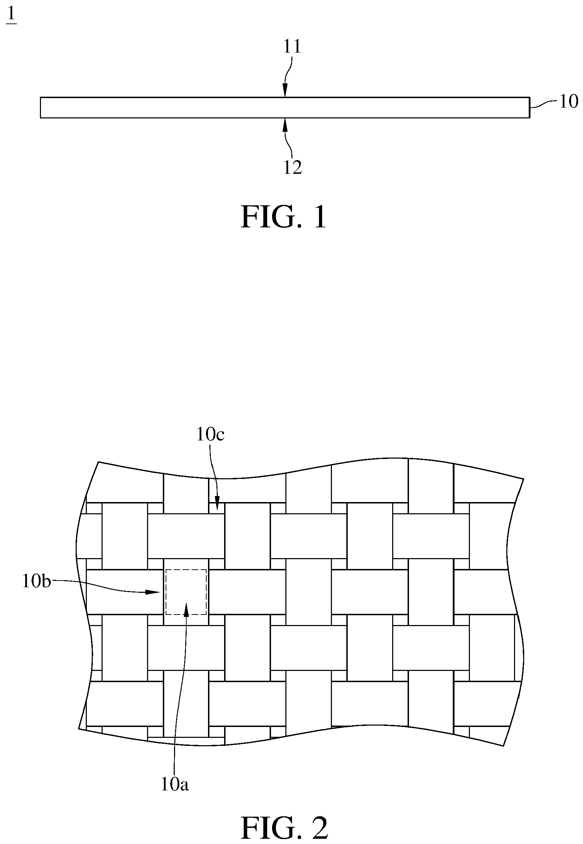

Please refer to FIG. 1, wherein FIG. 1 is a schematic diagram illustrating a polypropylene fabric according to an embodiment of the present disclosure. The polypropylene fabric 1 woven from a plurality of polypropylene fibers. As shown in FIG. 1, the polypropylene fabric 1 includes a body 10 and a first surface 11 and a second surface 12 on two opposite sides of the body 10. The fabric treating method used for the polypropylene fabric 1 includes performing electro-optical treatment on at least one of the first surface 11 and the second surface 12 of the polypropylene fabric 1, so that surface roughness of said at least one of the first surface 11 and the second surface 12 after the electro-optical treatment is higher than surface roughness before the electro-optical treatment. By using the electro-optical treatment to damage the smoothness of said at least one of the first surface 11 and the second surface 12 may increase the surface roughness of said at least one of the first surface 11 and the second surface 12, and may thereby improving adhesion of materials subsequently applied to the surface.

Moreover, please refer to FIG. 1 and FIG. 2, wherein FIG. 2 is an exemplary diagram illustrating a woven fiber structure of the polypropylene fabric according to an embodiment of the present disclosure. FIG. 2 shows the first surface 11 of the polypropylene fabric 1. FIG. 2 is illustrated only for convenience of explanation. The woven structure shown in FIG. 2 is only an example. The present disclosure does not limit the specific woven fiber structure. As shown in FIG. 2, the body 10 of the polypropylene fabric 1 is woven from a plurality of polypropylene fibers, a first partial fiber 10a of the body 10 is on a second partial fiber 10b of the body 10, and a pore 10c may present between the fibers. Therefore, after the electro-optical treatment, the surface roughness of the first partial fiber 10a is higher than the surface roughness of the second partial fiber 10b. In other words, a surface roughness of a fiber that is directly exposed is higher than the surface roughness of another fiber that is covered by said fiber.

In addition, a speed of the polypropylene fabric 1 passing through a processing machine of the electro-optical treatment may be 8 meters per minute to 12 meters per minute. The electro-optical treatment may be corona treatment. Further, the electro-optical treatment may be implemented by corona treatment using a current of 10 ampere to 14 ampere. By performing the electro-optical treatment on the first surface 11 of the polypropylene fabric 1, coating material subsequently coated on the first surface 11 may be attached the first surface 11 more firmly.

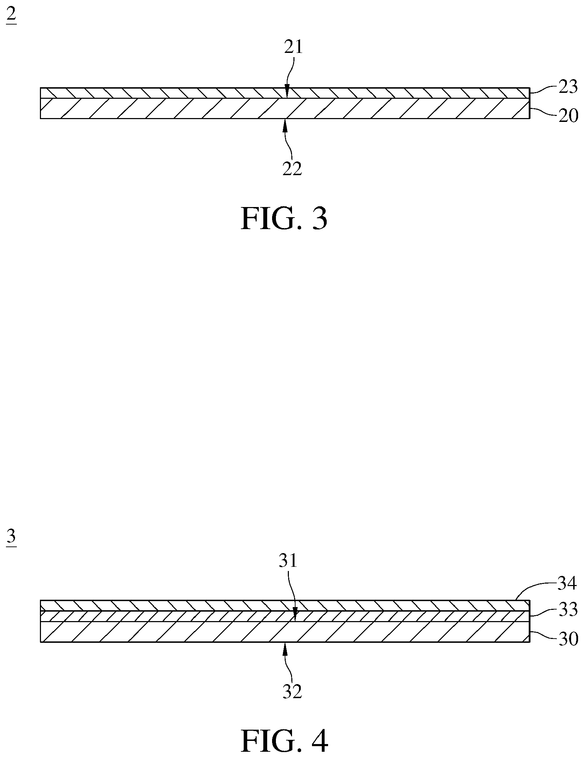

Please refer to FIG. 3, wherein FIG. 3 is a schematic diagram illustrating a polypropylene fabric according to another embodiment of the present disclosure. The polypropylene fabric 2 includes a body 20 and a first surface 21 and a second surface 22 on two opposite sides of the body 20. The body 20, the first surface 21 and the second surface 22 of the polypropylene fabric 2 may be the same as the body 10, the first surface 11 and the second surface 12 of the polypropylene fabric 1 shown in FIG. 1, their repeated descriptions are omitted herein.

The fabric treating method used for the polypropylene fabric 2 may further include coating a hot-melt glue material on the first surface 21 to form the hot-melt glue layer 23. Take FIG. 2 for example, there may be multiple pores 10c between the fibers of the polypropylene fabric 1, and the pores 10c may be filled with the hot-melt glue material. A melting point of the hot-melt glue material may be between 150°C and 155°C. The hot-melt glue material may be at least one of vinyl acetate (VAc), thermoplastic polyurethane (TPU) and ethylene vinyl acetate (EVA). Further, the hot-melt glue material may be recycled hot-melt glue material, so that the treatment process of the polypropylene fabric may be more eco-friendly.

During the coating of the hot-melt glue material, there may be some loss of the hot-melt glue material. Therefore, after coating the hot-melt glue material onto the first surface 21 for the first time, the hot-melt glue material may be dried. After the hot-melt glue material is dried, the hot-melt glue material may be coated onto the first surface 21 again, thereby forming the hot-melt glue layer 23 that fully covers the first surface 21. In other words, the fabric treating method may include coating the hot-melt glue material onto the first surface 21 for multiple times, and the drying of the hot-melt glue material may be performed following each coating procedure of the hot-melt glue material. The drying of the hot-melt glue material may be performed by using an oven to dry the hot-melt glue material, the present disclosure does not limit the method of performing said drying. After the coating and drying of the hot-melt glue material is finished and the hot-melt glue layer 23 is formed, cold calendaring may be performed on the hot-melt glue layer 23. The temperature of the roller used for said cold calendering may be between 60°C and 80°C, and is preferably not higher than 80°C. The speed of the polypropylene fabric 2 passing through the processing machine of performing the cold calendaring may be between 16 yards per minute and 18 yards per minute. The pressure of said cold calendering may be between 80 pounds and 100 pounds. Further, cold calendering may be performed within 24 hours after the hot-melt glue layer 23 is formed, and is preferably performed within 12 hours after the hot-melt glue layer 23 is formed. The parameter of the cold calendering processing mentioned above may be adjusted according to processing requirement.

Please refer to FIG. 4, wherein FIG. 4 is a schematic diagram illustrating a polypropylene fabric according to yet another embodiment of the present disclosure. The polypropylene fabric 3 includes a body 30, a first surface 31 and a second surface 32 on two opposite sides of the body 30 and a hot-melt glue layer 34 coated on the first surface 31. The body 30, the first surface 31, the second surface 32 and the hot-melt glue layer 34 of the polypropylene fabric 3 may be the same as the body 20, the first surface 21, the second surface 22 and the hot-melt glue layer 23 shown in FIG. 3, respectively. Their repeated descriptions are omitted herein.

The fabric treating method used for the polypropylene fabric 3 may further include, before coating the hot-melt glue material, coating a base glue material on the first surface 31 to form a base glue layer 33, wherein the base glue material may be at least one of polyurethane (PU) and thermoplastic polyurethane (TPU). In other words, the base glue layer 33 is located between the first surface 31 and the hot-melt glue layer 34. Take FIG. 2 as an example, there may be multiple pores 10c between the fibers of the polypropylene fabric 1, said pores 10c may be filled with the base glue material.

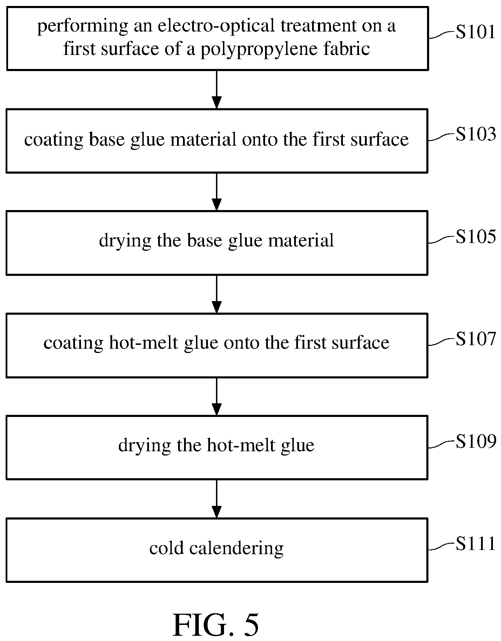

Please refer to FIG. 4 and FIG. 5, wherein FIG. 5 is a flowchart illustrating a fabric treating method according to an embodiment of the present disclosure. As shown in FIG. 5, the fabric treating method used for the polypropylene fabric 3 may include steps S101, S103, S105, S107, S109 and Sill.

In step S101, the processing machine of the electro-optical treatment is used to perform the electro-optical treatment on the first surface 31 of the polypropylene fabric 3, such that the surface roughness of the first surface 31 is higher than the surface roughness of the first surface 31 before the electro-optical treatment. The parameters of the electro-optical treatment are described above.

In steps S103 and S105, the base glue material is coated onto the first surface 31 that is electro-optically treated, and the base glue material is dried to form the base glue layer 33. The drying may be performed by using an oven to dry the base glue material.

In step S107, the hot-melt glue material is coated onto the first surface 31 that is electro-optically treated. Moreover, the hot-melt glue material may be coated onto the dried base glue layer 33. In step S109, the hot-melt glue material is dried to form the hot-melt glue layer 34. The drying may be performed by using an oven to dry the hot-melt glue material to form the hot-melt glue layer 34. Further, as described above, for full coverage of the hot-melt glue layer 34 on the first surface 31 (or on the base glue layer 33), steps S107 and S109 may be repeated for multiple times.

After the coating and drying of the hot-melt glue material are complete, in step S111, cold calendaring process may be performed on the polypropylene fabric 3 (on the base glue layer 33 and the hot-melt glue layer 34). The parameters of the cold calendering process are described above.

It should be noted that the above uses the first surface of the polypropylene fabric for illustration, the structure and treatment of one or more embodiments of the present disclosure may also be applied to the second surface of the polypropylene fabric. That is, the second surface may also go through the electro-optical treatment, may be coated with the base glue material and/or the hot-melt glue material, dried and performed with cold calendering process etc. as described above.

The polypropylene fabric according to one or more embodiments of the present disclosure may be used for manufacturing clothing, luggage, backpacks and wallets, etc., the present disclosure does not limit the application of the polypropylene fabric.

In view of the above description, the polypropylene fabric and the fabric treating method according to one or more embodiments of the present disclosure performs electro-optical treatment on the surface(s) of the polypropylene fabric to increase the surface roughness, may thereby improving adhesion of materials subsequently applied to the surface and avoiding white marks caused by folding.

## Claims

1. A polypropylene fabric (1,2,3), woven from a plurality of polypropylene fibers, comprising a first surface (11,21,31) and a second surface (12,22,32), wherein at least one of the first surface (11,21,31) and the second surface (12,22,32) is treated with electro-optical treatment.

2. The polypropylene fabric (1,2,3) according to claim 1, further comprising:
a hot-melt glue material (23,34) coated on the at least one of the first surface (11,21,31) and the second surface (12,22,32).

3. The polypropylene fabric (1,2,3) according to claim 2, wherein the hot-melt glue material (23,34) is at least one of vinyl acetate, thermoplastic polyurethane and ethylene vinyl acetate.

4. The polypropylene fabric (1,2,3) according to claim 2, wherein there is at least one pore (10c) between the plurality of polypropylene fibers, and the hot-melt glue material (23,34) fills the at least one pore (10c).

5. The polypropylene fabric (1,2,3) according to claim 2, further comprising:
a base glue material (33) coated on the at least one of the first surface (11,21,31) and the second surface (12,22,32), and is between the hot-melt glue material (23,34) and the at least one of the first surface (11,21,31) and the second surface (12,22,32).

6. The polypropylene fabric (1,2,3) according to claim 5, wherein the base glue material (33) is at least one of polyurethane and thermoplastic polyurethane.

7. The polypropylene fabric (1,2,3) according to claim 5, wherein there is at least one pore (10c) between the plurality of polypropylene fibers, and the base glue material (33) fills the at least one pore (10c).

8. The polypropylene fabric (1,2,3) according to claim 1, wherein the electro-optical treatment is implemented by corona treatment using a current of 10 ampere to 14 ampere.

9. The polypropylene fabric (1,2,3) according to claim 1, wherein a speed of the polypropylene fabric (1,2,3) passing through a processing machine of the electro-optical treatment is 8 meters per minute to 12 meters per minute.

10. A fabric treating method, adapted to a polypropylene fabric (1,2,3) woven from a plurality of polypropylene fibers, comprising:
performing electro-optical treatment on at least one of a first surface (11,21,31) and a second surface (12,22,32) of the polypropylene fabric (1,2,3).

11. The fabric treating method according to claim 10, further comprising:
coating a hot-melt glue material (23,34) on the at least one of the first surface (11,21,31) and the second surface (12,22,32).

12. The fabric treating method according to claim 11, further comprising:
coating the hot-melt glue material (23,34) on the at least one of the first surface (11,21,31) and the second surface (12,22,32) again.

13. The fabric treating method according to claim 12, wherein the hot-melt glue material (23,34) is at least one of vinyl acetate, thermoplastic polyurethane and ethylene vinyl acetate.

14. The fabric treating method according to claim 11, further comprising:
coating a base glue material (33) on the at least one of the first surface (11,21,31) and the second surface (12,22,32) before coating the hot-melt glue material (23,34) on the at least one of the first surface (11,21,31) and the second surface (12,22,32).

15. The fabric treating method according to claim 14, wherein the base glue material (33) is at least one of polyurethane and thermoplastic polyurethane.

16. The fabric treating method according to claim 10, wherein performing the electro-optical treatment on the at least one of the first surface (11,21,31) and the second surface (12,22,32) of the polypropylene fabric (1,2,3) comprises:
using a current of 10 ampere to 14 ampere to perform corona treatment on the at least one of the first surface (11,21,31) and the second surface (12,22,32).

17. The fabric treating method according to claim 10, wherein performing the electro-optical treatment on the at least one of the first surface (11,21,31) and the second surface (12,22,32) of the polypropylene fabric (1,2,3) comprises:
passing the polypropylene fabric (1,2,3) through a processing machine of the electro-optical treatment with a speed of 8 meters per minute to 12 meters per minute.
